# DEMANDE DE BREVET EUROPEEN

(11) **EP 2 334 052 A2**
(43) Date de publication de la demande: **15.06.2011**
(21) Numéro de dépôt: 10192257.3
(22) Date de dépôt: 23.11.2010
(51) Int. Cl.: H04N 5/28, H04N 7/18, H04N 5/232, H04N 5/262

(54) **Procédé et installation de pilotage de caméras, et ensemble correspondant**

(30) Priorité: 26.11.2009 FR 0905686; 26.11.2009 FR 0905685
(71) Demandeur: Defiboat Technology, 85600 Saint Georges de Montaigu (FR)
(72) Inventeur: Brochard, Patricia, 85600, SAINT GEORGES DE MONTAIGU (FR); Coville, Thomas, 56470, SAINT PHILIBERT (FR)
(74) Mandataire: Godineau, Valérie

(57) **Abrégé**

L'invention concerne une installation et un procédé de pilotage d'au moins deux caméras (21, 22, 23) réseau aptes à communiquer par un réseau de communication (100, 101) avec des moyens d'émission et de réception d'une régie (3). Ledit procédé comprend les étapes suivantes:
- on envoie depuis la régie une requête dite principale (R1) à l'une des caméras (21) pour demander un flux vidéo dit de qualité, et
- on envoie depuis la régie des requêtes auxiliaires (R2) aux autres caméras (22, 23) pour demander des images fixes, le débit de données consommé par l'émission d'images fixes étant inférieur au débit de données consommé par l'émission du flux vidéo de qualité,
- on visualise simultanément les données d'image envoyées par chaque caméra,

lesdites requêtes auxiliaires (R2) étant émises avec un intervalle de temps, par exemple une seconde, supérieur à l'intervalle de temps séparant deux images successives composant le flux vidéo de qualité.

## Description

La présente invention concerne de manière générale le pilotage de caméras pour la transmission de données d'images, telles que flux vidéo et images fixes, vers une régie.

Jusqu'à présent, le skipper d'un bateau dispose à bord d'un équipement vidéo lui permettant d'enregistrer des séquences, d'effectuer un montage et de l'envoyer à une régie à terre, via une liaison satellite. Cet équipement vidéo est complexe à utiliser et nécessite un temps important de préparation de la part du skipper au détriment de ses tâches principales de navigation. En effet, avec un tel équipement vidéo connu de l'état de la technique, seul le skipper peut choisir les flux vidéo à transmettre à la station à terre et procéder à la transmission desdits flux vidéo.

Pour résoudre ce problème, la demanderesse a développé une solution selon laquelle le bateau est équipé d'une pluralité de caméras réseau pilotables à distance par une régie pour pouvoir visualiser simultanément différentes scènes sur le bateau et sélectionner aisément les scènes que l'on souhaite diffuser, avec un minimum d'intervention du skipper.

Cependant, la transmission de flux vidéo consomme un débit de données très important. Ainsi, lorsque l'on souhaite envoyer simultanément par un même réseau de communication des flux vidéo de plusieurs caméras, la bande passante du réseau de communication risque d'être saturée et de ne pas permettre une bonne transmission des séquences acquises par les caméras.

On connait également de l'état de la technique, notamment des documents US 2003/197785 et US 2005/094562, un système comportant une pluralité de caméras pilotées de manière à émettre, pour certaines, des images vidéo de haute qualité et, pour d'autres, des images vidéo dégradées. Ainsi, dans les solutions des documents US 2003/197785 et US 2005/094562, l'émission de données d'images de plus faible poids s'effectue en réduisant la résolution des caméras concernées et donc en réduisant la qualité des images composant le flux vidéo émis par lesdites caméras. Une telle dégradation du flux vidéo de la caméra n'est pas souhaitable. En outre, même en dégradant la qualité des images composant le flux vidéo envoyé par lesdites caméras, le flux vidéo ainsi dégradé consomme encore une part importante de la bande passante. Ainsi, non seulement les solutions des documents US 2003/197785 et US 2005/094562 présentent un risque encore important de saturation du réseau de communication, mais en plus, la dégradation des flux vidéo des caméras ne permet pas de conserver une image de qualité suffisante pour permettre à l'opérateur d'analyser la scène associée à la caméra correspondante. L'opérateur ne peut donc pas décider de manière rapide, aisée et fiable s'il doit ou non effectuer un changement de sélection de caméra.

La présente invention a pour but de permettre la transmission simultanée des données d'image de plusieurs caméras sans saturer la bande passante du réseau de communication utilisé entre les caméras et la régie.

Un autre but de la présente invention est également de conserver, pour chaque donnée d'image émise par les caméras, une qualité suffisante pour permettre à l'opérateur d'analyser correctement la scène associée à chaque caméra, afin de sélectionner ou non la caméra correspondante, par exemple pour un changement de scène.

Un autre but de la présente invention est également de permettre à l'opérateur de changer rapidement de caméra sélectionnée, avec un temps réduit de latence entre l'arrêt d'émission du flux vidéo de qualité de la caméra précédemment sélectionnée et le début de l'émission du flux vidéo de qualité de la caméra nouvellement sélectionnée.

A cet effet, l'invention a pour objet un procédé de pilotage d'au moins deux caméras, dites caméras réseau, aptes à communiquer par un réseau de communication avec des moyens d'émission et de réception de données d'une unité de pilotage desdites caméras, appelée régie, de préférence située à terre,
chacune desdites caméras étant apte à recevoir des requêtes et à émettre des données d'image, telles que des flux vidéo et des images fixes, en fonction des requêtes reçues,
caractérisé en ce que ledit procédé comprend au moins les étapes suivantes:
- on envoie depuis la régie une requête dite principale à l'une des caméras, appelée caméra sélectionnée, pour demander un flux vidéo dit de qualité, et
- on envoie depuis la régie une ou plusieurs requêtes dites auxiliaires à l'autre ou au moins une partie des autres caméras, appelées caméras auxiliaires, pour demander des images fixes,
- on visualise simultanément, dans des fenêtres de visualisation distinctes, les données d'image envoyées par chaque caméra en fonction des requêtes reçues par lesdites caméras,
ledit procédé étant également caractérisé en ce que lesdites requêtes auxiliaires sont émises avec un intervalle de temps, par exemple une seconde, supérieur à l'intervalle de temps séparant deux images successives composant le flux vidéo de qualité.

Une telle gestion des caméras permet la réception simultanée de données d'images, en particulier flux vidéo et images fixes, des différentes caméras, sans saturer le réseau de communication utilisé entre les caméras et la régie, et tout en bénéficiant d'un flux vidéo de qualité transmis par la caméra sélectionnée.

En effet, la transmission d'images fixes par les caméras autres que celle sélectionnée permet de visualiser simultanément les scènes acquises par les différentes caméras, avec un débit limité, ce qui réduit le risque de saturation de la bande passante du réseau de communication.

Les caméras réseau présentent l'avantage de permettre une communication bidirectionnelle et ainsi de pouvoir être pilotées à distance. Plus précisément, une caméra réseau correspond à une caméra numérique avec serveur web intégré, possédant sa propre adresse IP, qui est équipée d'une connexion réseau lui permettant de fonctionner de manière autonome, sans ordinateur, pour acquérir des données d'image, telles que flux vidéo et images fixes, puis les transmettre sur un réseau de communication fonctionnant selon un protocole Internet, de préférence selon le protocole UDP pour la transmission du flux vidéo et selon le protocole TCP pour les images fixes et toutes les autres requêtes.

L'opérateur de la régie peut choisir la caméra dite sélectionnée dont il souhaite récupérer le flux vidéo de qualité. Simultanément, l'opérateur de la régie reçoit des images fixes des autres caméras, ce qui lui permet de visualiser en permanence les scènes ou prises d'image des caméras auxiliaires sans saturer la bande passante de la liaison entre les caméras et la régie. L'opérateur de la régie peut également changer de caméra sélectionnée pour recevoir le flux vidéo de qualité correspondant.

Une telle gestion du débit des caméras est particulièrement avantageuse dans le cas d'une liaison satellite dont la bande passante étroite limite la bande passante globale du réseau de communication entre caméras et régie. En particulier, les débits de données consommés par l'émission du flux vidéo de qualité de la caméra sélectionnée et par l'émission des images fixes de la ou des caméras auxiliaires sont choisis de telle sorte que la somme desdits débits est inférieure au débit d'émission maximal autorisé pour la partie du réseau de communication de plus faible bande passante, par exemple une partie du réseau de communication formée par un réseau satellite.

Comme rappelé ci-dessus, les images fixes sont émises par la ou chaque caméra auxiliaire avec un intervalle de temps supérieur à l'intervalle de temps séparant deux images successives composant le flux vidéo de qualité émis par la caméra sélectionnée.

Chaque caméra est apte à émettre des images fixes et des flux vidéo, encore appelés images vidéo, Les images fixes se distinguent des flux vidéo, ou images vidéo, en ce que l'émission par une caméra auxiliaire de chaque image fixe nécessite la réception par ladite caméra auxiliaire d'une requête auxiliaire correspondante.

Autrement dit, une image fixe émise par ladite caméra auxiliaire n'est rafraichie que lorsque ladite caméra auxiliaire reçoit une nouvelle requête auxiliaire. A l'inverse, à réception d'une requête principale, la caméra sélectionnée émet en continu ledit flux vidéo de qualité qui n'est arrêté que lorsque ladite caméra sélectionnée reçoit une requête de mise en pause. Autrement dit, les images composant le flux vidéo de la caméra sélectionnée sont automatiquement émises jusqu'à la réception d'une requête de mise en pause.

L'émission d'images fixes consomme peu de débit par comparaison au débit nécessaire à l'émission du flux vidéo de qualité, ce qui permet d'envoyer des requêtes régulières aux caméras auxiliaires pour rafraichir les images fixes transmises par lesdites caméras, sans risquer de saturer la bande passante du réseau de communication.

La réception d'images fixes à intervalles réguliers, par exemple une seconde, est suffisante pour permettre à l'opérateur de la régie d'apprécier les scènes acquises par les caméras auxiliaires et déterminer ainsi la caméra à sélectionner pour recevoir le flux vidéo de qualité correspondant à la scène qui intéresse l'opérateur de la régie. Ainsi, l'opérateur de la régie bénéficie des données d'images des caméras auxiliaires qui consomment peu de bande passante et qui lui permettent d'anticiper un changement de caméra pour un changement de plan ou scène, afin de mettre en avant une scène particulière ou suivre par exemple le déplacement du skipper sur le bateau dans le cas d'une application de l'invention à la navigation. En effet, la transmission d'images fixes par les caméras auxiliaires à intervalle régulier permet à l'opérateur de la régie de visualiser l'ensemble des scènes acquises par lesdites caméras, en même temps que le flux vidéo de qualité de la caméra sélectionnée continue d'être transmis à la régie.

Selon une caractéristique avantageuse de l'invention, le procédé comprend les étapes suivantes :
- on définit pour chaque caméra les paramètres du flux vidéo de qualité et les paramètres d'image fixe souhaités,
- on suspend pour chaque caméra l'émission du flux vidéo de qualité jusqu'à réception par ladite caméra ainsi sélectionnée de la requête principale qui autorise l'émission par ladite caméra du flux vidéo de qualité.

Les paramètres du flux vidéo de qualité souhaités sont définis lors de l'initialisation de l'installation, ce qui permet un gain en temps d'exécution dans la récupération des flux vidéo souhaités, en particulier lors d'un changement de plan nécessitant de récupérer le flux vidéo de qualité d'une autre caméra. Une telle solution évite en effet d'avoir à effectuer à chaque demande de flux vidéo une séquence d'authentification et de paramétrage des caméras.

Selon une caractéristique avantageuse de l'invention, pour changer de caméra sélectionnée :
- on émet depuis la régie une requête de mise en pause de l'émission du flux vidéo de la caméra précédemment sélectionnée,
- on émet une requête principale à la caméra que l'on souhaite sélectionner et une requête auxiliaire à l'autre ou au moins l'une des autres caméras.

On peut également prévoir que l'émission d'une requête principale à une caméra entraine automatiquement l'émission aux autres caméras de requêtes de mise en pause.

Selon une caractéristique avantageuse de l'invention, les paramètres du flux vidéo de qualité définis pour chaque caméra comprennent :
- la définition, ou dimension, des images composant le flux vidéo, et/ou
- le nombre d'images par seconde du flux vidéo, et/ou
- la couleur ou le noir et blanc, et/ou
- le taux de compression du flux vidéo.

Préférentiellement, le taux de compression du flux vidéo est au moins fonction d'un paramètre, appelé débit cible, qui correspond au débit de données que l'on souhaite allouer audit flux vidéo. Avantageusement, le taux de compression est également fonction d'au moins un autre paramètre dit de priorisation, à savoir le taux de rafraîchissement et/ou la qualité d'image.

Avantageusement, les paramètres d'image fixe définis pour chaque caméra comprennent :
- la définition, ou dimension, de l'image fixe, et/ou
- la couleur ou le noir et blanc, et/ou
- le taux de compression du flux vidéo.

Préférentiellement, au moins une partie des valeurs des paramètres d'image fixe des caméras, autres que la couleur et la fréquence d'émission qui n'est définie que pour le flux vidéo, par exemple la définition et/ou le taux de compression, sont sensiblement les mêmes que celles des paramètres associés au flux vidéo de qualité des caméras.

On conserve ainsi pour chaque caméra auxiliaire une bonne qualité d'image fixe qui permet à l'opérateur de visualiser précisément la scène correspondant à ladite caméra, ce qui lui permet d'analyser et de décider aisément et de manière fiable de la caméra à sélectionner lorsqu'un changement de plan de caméra est nécessaire.

Selon une caractéristique avantageuse de l'invention, le flux vidéo de la caméra sélectionnée récupéré par la régie est transmis à un diffuseur de contenu, tel qu'un opérateur de télévision, un opérateur Internet ou encore un opérateur de téléphonie mobile. Comme expliqué ci-après, le même flux vidéo peut être simultanément enregistré en un fichier vidéo pour archivage ou montage ultérieur.

L'invention concerne également une installation de pilotage d'au moins deux caméras, dites caméras réseau, aptes à recevoir des requêtes et à émettre des données d'image, telles que des flux vidéo et des images fixes, en fonction des requêtes reçues,
ladite installation comprenant au moins une unité de pilotage, appelée régie, équipée de moyens d'émission et de réception de données aptes à communiquer par un réseau de communication avec lesdites caméras, lesdits moyens d'émission et de réception de données comprenant une unité de traitement électronique et informatique, telle qu'un ordinateur, caractérisée en ce que ladite unité comprend au moins :
- un module d'émission de requête dite principale pour demander à l'une des caméras, appelée caméra sélectionnée, un flux vidéo dit de qualité, et
- un module d'émission d'une ou plusieurs requêtes dites auxiliaires pour demander à l'autre ou au moins une partie des autres caméras, appelées caméras auxiliaires, des images fixes,
- des moyens de visualisation simultanée, dans des fenêtres de visualisation distinctes, des données d'image envoyées par chaque caméra en fonction des requêtes reçues par lesdites caméras,
et en ce que ledit module d'émission de requêtes auxiliaires est configuré pour émettre lesdites requêtes auxiliaires avec un intervalle de temps, par exemple une seconde, supérieure à l'intervalle de temps séparant deux images successives composant le flux vidéo de qualité,

Selon une caractéristique avantageuse de l'invention, ladite installation comprend des moyens de définition permettant de définir pour chaque caméra les paramètres du flux vidéo de qualité et les paramètres d'image fixe, et des moyens de mise en pause permettant de suspendre pour chaque caméra l'émission du flux vidéo de qualité correspondant jusqu'à réception par ladite caméra d'une requête principale qui autorise l'émission par ladite caméra du flux vidéo de qualité.

Selon une caractéristique avantageuse de l'invention, ladite installation comprend des moyens d'indication permettant d'indiquer la caméra que l'on souhaite sélectionner et des moyens de changement de sélection de caméra permettant de changer de caméra sélectionnée,
lesdits moyens de changement de sélection de caméra étant configurés pour, lorsque la caméra indiquée par lesdits moyens d'indication est différente de celle précédemment sélectionnée, commander l'émission par les moyens de mise en pause d'une requête de mise en pause de l'émission du flux vidéo de la caméra précédemment sélectionnée, et commander l'émission par le module d'émission de requête principale d'une requête principale à la caméra indiquée par lesdits moyens d'indication et l'émission par le module d'émission de requête auxiliaire d'une requête auxiliaire à l'autre ou au moins l'une des autres caméras dite alors auxiliaire.

L'invention concerne également un ensemble de transmission de données d'image, telles que flux vidéo et images fixes, issues de caméras, dites caméras réseau, embarquées sur un véhicule, de préférence un bateau, ledit ensemble comprenant :
- au moins deux caméras réseau disposées sur ledit véhicule, aptes chacune à recevoir des requêtes et à émettre des données d'image en fonction desdites requêtes reçues,
- des moyens d'émission et de réception de données auxquels sont reliées lesdites caméras, lesdits moyens d'émission et de réception de données des caméras étant configurés pour communiquer avec un réseau de communication,
- une installation de pilotage des caméras,
caractérisé en ce que ladite installation de pilotage est telle que décrite ci-dessus.

Selon une caractéristique avantageuse de l'invention, au moins une partie dudit réseau de communication étant formée par un réseau satellite, lesdits moyens d'émission et de réception de données, auxquels sont reliées les caméras embarquées sur le véhicule, sont équipés d'une antenne satellite pour l'émission et la réception des données par ledit réseau satellite.

Selon une caractéristique avantageuse de l'invention, le véhicule étant un bateau habitable, de préférence un multicoque tel qu'un trimaran, au moins une caméra est disposée à l'intérieur de l'habitacle du bateau et une autre à l'extérieur de l'habitacle.

Selon une caractéristique avantageuse de l'invention, le véhicule étant un bateau, de préférence un multicoque tel qu'un trimaran, au moins une caméra est disposée sur le bateau de telle sorte que son champ couvre l'arrière du bateau et au moins une autre caméra de telle sorte que son champ couvre l'avant du bateau, et, de préférence, au moins une caméra est disposée de telle sorte que son champ couvre la zone de tribord du bateau et au moins une autre caméra est disposée de telle sorte que son champ couvre la zone de bâbord du bateau.

Selon une caractéristique avantageuse de l'invention, le module d'émission de requête auxiliaire est asservi au module d'émission de requête principale de telle sorte que le module d'émission de requête auxiliaire est configuré pour envoyer des requêtes auxiliaires seulement à la ou au moins une des caméras autres que la caméra sélectionnée.

L'invention sera bien comprise à la lecture de la description suivante d'exemples de réalisation, en référence aux dessins annexés dans lesquels :

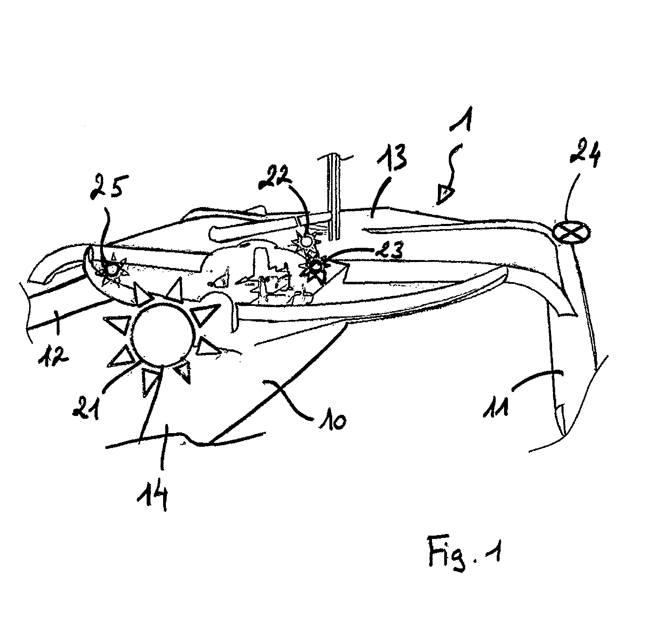

- la figure 1 est une vue d'un trimaran équipé de caméras réseau configurées de manière à permettre la transmission de données d'image par liaison satellite à une régie à terre ;
- la figure 2 est un schéma synoptique illustrant l'ensemble du réseau de communication entre les caméras et la régie à terre ;
- la figure 3 est une vue illustrant l'envoi d'une requête principale à une caméra et l'envoi de requêtes auxiliaires aux autres caméras, ainsi que la transmission par les caméras des données d'image correspondant aux requêtes reçues ;
- la figure 4 est une vue d'un graphique illustrant dans le temps (t) la répartition du débit (D) associé à quatre caméras.

En référence aux figures et comme rappelé ci-dessus, l'invention concerne un procédé et une installation de pilotage et de transmission de données d'image, telles que flux vidéo et images fixes, de caméras réseau.

Dans l'exemple illustré aux figures, le véhicule est un bateau, en particulier un trimaran. En effet, un tel procédé et une telle installation s'appliquent de manière particulièrement avantageuse à la prise et la retransmission d'images lors de courses de voiliers au grand large. En variante, le véhicule peut être un engin roulant. Ainsi, le procédé et l'installation décrits ci-dessous peuvent être également appliqués à tout autre véhicule, par exemple pour la prise et la retransmission d'images lors de courses de voitures. Selon une autre variante de réalisation, les caméras peuvent être installées sur un site fixe.

Dans l'exemple illustré aux figures, le bateau est équipé de cinq caméras réseau 21, 22, 23, 24, 25. Chaque caméra est apte à recevoir des requêtes et à émettre des données d'image en fonction desdites requêtes reçues.

Les caméras réseau sont formées principalement d'un capteur vidéo, et éventuellement d'un capteur audio, associé à une unité de traitement électronique et informatique intégrée à la caméra qui forme un serveur web pilotable à distance via le réseau de communication. Ladite unité de traitement permet une communication bidirectionnelle pour la réception de requêtes et la transmission des données d'images et éventuellement de données audio. Lesdites caméras sont reliées à des moyens 5 d'émission et de réception de données configurés pour communiquer avec un réseau de communication 100, 101.

Une unité de pilotage 3, appelée régie, distante du bateau, est équipée de moyens 9 d'émission et de réception de données aptes à communiquer avec lesdites caméras 21, 22, 23, 24, 25. Préférentiellement ladite régie est située à terre. Comme détaillé ci-après, lesdites caméras 21, 22, 23, 24, 25 sont configurées pour communiquer avec lesdits moyens 9 d'émission et de réception de données de la régie 3 par un même réseau de communication.

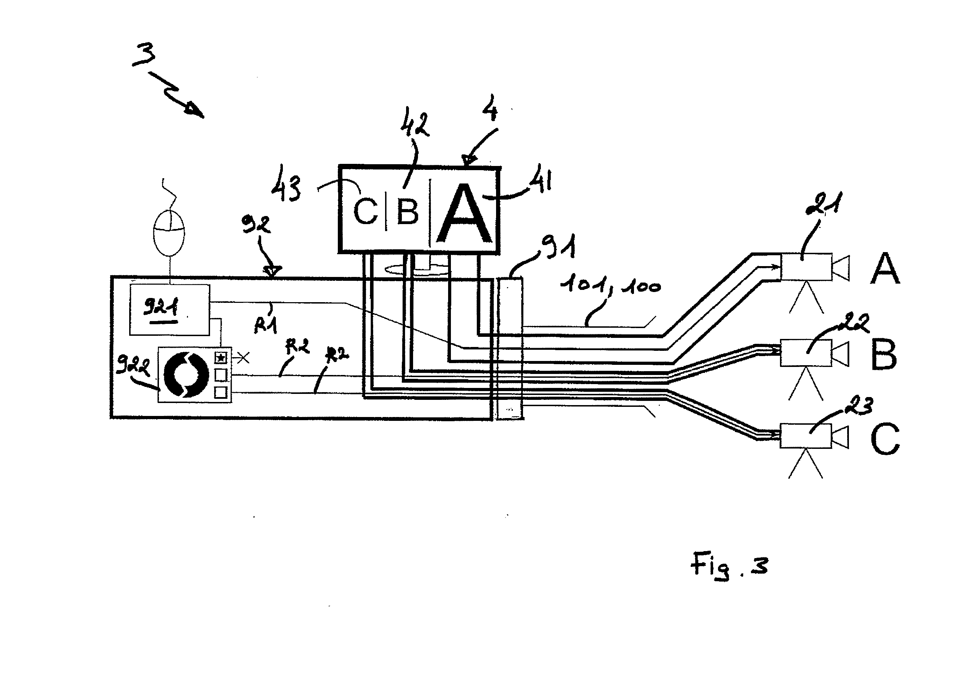

Comme illustré à la figure 3, lesdits moyens 9 d'émission et de réception de données de l'unité de pilotage 3 comprennent une unité 92 de traitement électronique et informatique, telle qu'un ordinateur, permettant d'envoyer des requêtes aux caméras 21, 22, 23, 24, 25 pour demander des données d'image. Lesdits moyens 9 d'émission et de réception de données de la régie 3 comprennent également un modem 91, raccordé à ladite unité de traitement électronique et informatique 92, pour l'échange de données avec les caméras via ledit réseau de communication 100, 101.

Ladite unité 92 de traitement électronique et informatique est équipée de moyens de visualisation 4, dans des fenêtres de visualisation 41, 42, 43, 44 distinctes, des données d'image transmises par chacune desdites caméras à la régie 3.

Au moins une partie du réseau de communication 100, 101 entre les caméras et la régie est formée par un réseau hertzien 100 pour permettre une transmission par onde radio des données d'images prises par les caméras embarquées sur le bateau à destination de la régie située à terre.

Dans l'exemple illustré aux figures, ledit réseau hertzien est un réseau satellite. Ledit réseau de communication 100, 101 comprend ainsi un réseau satellite 100 formé d'au moins un satellite et un réseau de communication terrestre 101, tel que réseau de téléphonie mobile ou réseau câblé de type ADSL (c'est-à-dire un réseau composé de stations terrestres). Le réseau de communication entre caméras réseau et régie fonctionne selon un protocole Internet, de préférence selon le protocole UDP pour la transmission du flux vidéo et selon le protocole TCP pour les images fixes et les requêtes. Ledit réseau satellite est apte, d'une part, à communiquer avec lesdits moyens 5 d'émission et de réception via l'antenne satellite 8 équipant le bateau, comme détaillé ci-après, et, d'autre part, avec ledit réseau internet 101 auquel sont reliés les moyens 9 d'émission et de réception de la régie 3. En particulier, ledit réseau satellite comprend au moins un satellite auquel les caméras peuvent transmettre des données d'image via l'antenne 8 satellite.

Les moyens 5 d'émission et de réception équipés de l'antenne satellite 8 forment des moyens de connexion bidirectionnels par satellite. Lesdits moyens 5 d'émission et de réception équipant le véhicule comprennent également un modem 7 raccordé à l'antenne 8 et au moins un routeur 6 relié au modem 7. Chaque caméra 21, 22, 23, 24, 25 est reliée au(x) routeur(s) 6. A cet effet chaque caméra possède une connexion réseau, par exemple formée par une prise Ethernet, qui permet sa liaison au(x) routeur(x). Lesdits moyens 5 d'émission et de réception de données des caméras sont en particulier formés ici par un dispositif vendu sous le nom BGAN ou BGANSatellite qui comprend un modem 7 avec antenne 8 satellite intégrée. Le ou les routeurs 6 assurent la liaison entre les caméras 21, 22, 23, 24, 25 et le dispositif BGAN 7, 8. Le dispositif est appelé de manière simplifiée antenne BGAN.

Lesdites caméras 21, 22, 23, 24, 25 sont configurées pour communiquer avec lesdits moyens 9 d'émission et de réception de données de la régie 3 par un même réseau de communication dont au moins une partie est formée par la liaison satellite 100. Autrement dit, les moyens 5 d'émission et de réception de données sont communs à l'ensemble des caméras réseau embarquées destinées à transmettre leurs données d'image à la régie. Les moyens d'émission et de réception de données 5 comprennent ainsi une seule antenne 8 satellite.

L'utilisation d'une antenne BGAN permet par rapport aux antennes classiques connues de l'état de la technique d'augmenter le débit de transfert de données pour un poids, un encombrement et une consommation électrique de l'antenne, inférieurs aux autres antennes existantes.

Dans l'exemple illustré aux figures, le bateau 1 est un multicoque, en particulier un trimaran. On dispose au moins une caméra 23 à l'intérieur de l'habitacle du bateau et une autre 22 à l'extérieur de l'habitacle. On dispose également au moins une caméra 21 sur le bateau de telle sorte que son champ couvre l'arrière 14 du bateau et au moins une autre caméra 22 de telle sorte que son champ couvre l'avant 13 du bateau. A cet effet, les caméras 21, 22 peuvent être disposées sur la coque centrale 10 du bateau. Une caméra extérieure peut être disposée sur un mât du bateau.

Préférentiellement, au moins une caméra 24 est disposée de telle sorte que son champ couvre la zone de tribord du bateau et au moins une autre caméra 25 est disposée de telle sorte que son champ couvre la zone de bâbord du bateau. A cet effet, les caméras 25, 24 peuvent être disposées sur, ou au voisinage, des flotteurs bâbord 12 et tribord 11.

Les caméras sont orientées et configurées de telle sorte que la combinaison des champs des caméras permet de couvrir l'ensemble des zones du bateau pour permettre à l'opérateur de la régie de suivre le skipper lors de ses déplacements sur le bateau en changeant simplement la sélection de la caméra dont il souhaite recevoir un flux vidéo de qualité comme détaillé ci-après.

Lesdits moyens 9 d'émission et de réception de données de la régie 3 comprennent une unité de traitement électronique et informatique 92, telle qu'un ordinateur, équipée desdits moyens de visualisation 4 des flux vidéo reçus, et un modem 91, raccordé à ladite unité de traitement 92 électronique et informatique, pour l'échange de données avec les caméras via ledit réseau de communication 100, 101.

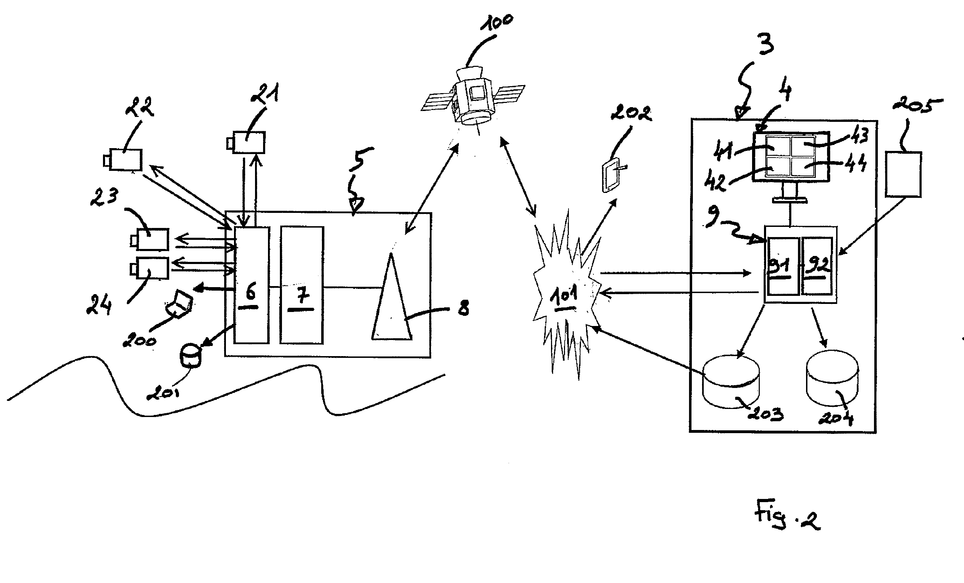

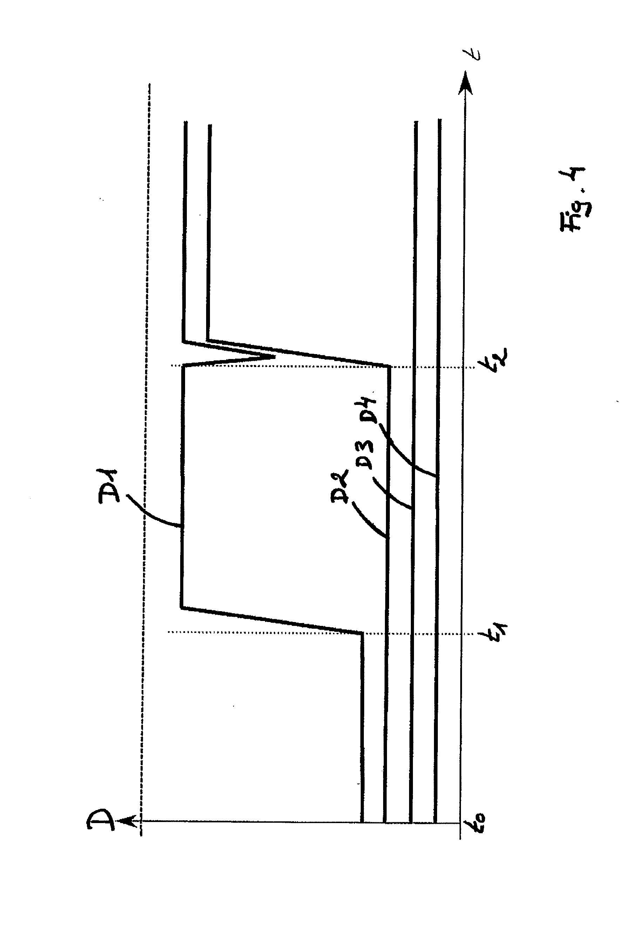

Comme illustré à la figure 3, ladite unité 92 de traitement électronique et informatique comprend un module d'émission 921 de requête dite principale R1 pour demander à l'une des caméras 21, appelée caméra sélectionnée, un flux vidéo dit de qualité. Ladite unité 92 de traitement électronique et informatique comprend également un module d'émission 922 d'une ou plusieurs requêtes dites auxiliaires R2 pour demander à au moins une partie des autres caméras 22, 23 appelées caméras auxiliaires, des images fixes. Dans l'exemple illustré à la figure 3, les moyens de visualisation 4 sont configurés pour afficher les données d'image de trois caméras, ici les caméras 21, 22, 23, dans trois fenêtres de visualisation distinctes 41, 42, 43. Bien entendu, les moyens de visualisation 4 peuvent être configurés de manière à afficher un nombre supérieur de fenêtres de visualisation pour la visualisation des données d'image d'un nombre de caméras plus important. Ainsi, dans l'exemple illustré aux figures 2 et 4, les moyens de visualisation 4 sont configurés pour afficher les données d'images des quatre caméras 21, 22, 23, 24 dans quatre fenêtres de visualisation distinctes 41, 42, 43, 44. Il est possible de remplacer l'affichage des données d'image d'une de ces caméras par les données d'image de la caméra 25.

Comme illustré par le graphique de la figure 4 pris entre les temps t1 et t2, les paramètres, ou caractéristiques, des images fixes et les paramètres du flux vidéo de qualité sont choisis de telle sorte que le débit de données D2, D3, D4 consommé par l'émission d'images fixes d'une caméra auxiliaire 22, 23, 24 est inférieur au débit de données D1 consommé par l'émission du flux vidéo de qualité de la caméra sélectionnée 21.

Lesdites requêtes auxiliaires R2 sont émises avec un intervalle de temps, par exemple une seconde, supérieur à l'intervalle de temps séparant deux images successives composant le flux vidéo de qualité.

Avantageusement, les débits de données consommés par l'émission du flux vidéo de qualité de la caméra sélectionnée 21 et par l'émission des images fixes de la ou des caméras auxiliaires 22, 23, 24 sont choisis de telle sorte que la somme desdits débits est inférieure au débit d'émission maximal autorisé, ou bande passante, pour la partie du réseau de communication de plus faible bande passante, ici le réseau satellite. Autrement dit, le débit total d'émission des caméras est inférieur à la bande passante du canal de communication par satellite.

Comme illustré à la figure 4, on peut prévoir que l'émission du flux vidéo de qualité de la caméra sélectionnée 21 correspond à un débit d'émission de données supérieur à la somme des débits d'émission de données correspondant aux émissions d'images fixes des caméras auxiliaires 22, 23, 24.

Préférentiellement, le module d'émission 922 de requête auxiliaire est asservi au module d'émission 921 de requête principale de telle sorte que le module d'émission 922 de requête auxiliaire est configuré pour envoyer des requêtes auxiliaires uniquement à la ou au moins l'une des caméras autres que la caméra sélectionnée. Pour rappel, la caméra sélectionnée est celle qui reçoit une requête principale pour la transmission d'un flux vidéo de qualité.

En outre, le module d'émission 921 de requête principale est configuré pour ne pas autoriser l'envoi de requête principale à une autre caméra tant que l'émission du flux vidéo de la caméra jusqu'ici sélectionnée n'est pas suspendue.

La régie et/ou les caméras comprennent des moyens de définition permettant de définir pour chaque caméra 21, 22, 23, 24 les paramètres du flux vidéo de qualité et les paramètres d'image fixe souhaités. La régie 3 ,de préférence l'unité de traitement 92 de la régie, comprend des moyens de mise en pause permettant de suspendre pour chaque caméra 21, 22, 23, 24 l'émission du flux vidéo de qualité jusqu'à réception par ladite caméra 21 ainsi sélectionnée de la requête principale R1 qui autorise l'émission par ladite caméra 21 du flux vidéo de qualité. Lesdits moyens de mise en pause et lesdits moyens de définition sont réalisés sous forme de programme informatique.

La régie 3, de préférence l'unité de traitement 92, comprend également des moyens d'indication permettant d'indiquer la caméra que l'on souhaite sélectionner et des moyens de changement de sélection de caméra permettant de changer de caméra sélectionnée. Lesdits moyens d'indication peuvent être formés par un périphérique d'entrée de l'unité de traitement 92, par exemple une souris, un clavier ou encore un écran tactile.

Lesdits moyens de changement de sélection de caméra sont configurés pour, lorsque la caméra indiquée par lesdits moyens d'indication est différente de celle précédemment sélectionnée, commander l'émission par les moyens de mise en pause d'une requête de mise en pause de l'émission du flux vidéo de la caméra 21 précédemment sélectionnée, et commander l'émission par le module d'émission de requête principale 921 d'une requête principale R1 à la caméra 22 indiquée par lesdits moyens d'indication et l'émission par le module d'émission de requête auxiliaire 922 d'une requête auxiliaire R2 à l'autre ou au moins l'une des autres caméras 21, 23, 24 dite alors auxiliaire. Lesdits moyens de changement de sélection de caméra sont réalisés sous forme de programme informatique.

En pratique, l'unité de traitement 92 est configurée de telle sorte que lorsque l'opérateur déclenche une action de changement de caméra à sélectionner, par exemple en cliquant sur la fenêtre de visualisation d'une caméra jusqu'ici auxiliaire, une requête de pause est envoyée à la caméra jusqu'ici sélectionnée, puis une requête principale est envoyée à la caméra nouvellement sélectionnée. A cet effet, un module d'émission de requête de pause est implémenté dans l'unité de traitement, en lien avec le module 921 de requête principale.

De manière plus générale, chaque module d'émission de requête est implémenté dans un programme informatique qui comprend également une interface permettant à l'opérateur de la régie de sélectionner la caméra pour laquelle il souhaite recevoir un flux de qualité. Lorsque l'opérateur a sélectionné la caméra souhaitée, le module d'émission de requête de pause suspend l'émission du flux vidéo de la caméra précédemment sélectionnée (le cas échéant), et le module de traitement 921 émet une requête principale à destination de ladite caméra nouvellement sélectionnée pour demander le flux vidéo de qualité de ladite caméra. Le module de traitement 922 asservi au module de traitement 921 émet alors des requêtes auxiliaires aux autres caméras pour recevoir des images fixes.

Un ordinateur 200 est relié aux moyens 5 d'émission et de réception embarqués sur le véhicule, en réseau avec les caméras via le(s) routeur(s) 6 pour permettre si nécessaire au skipper de visualiser les données d'image des caméras, par exemple le flux vidéo d'une caméra extérieure.

On peut prévoir qu'un serveur de stockage 201 de données soit relié aux moyens 5 d'émission et de réception, via le(s) routeur 6(s), pour enregistrer les flux vidéo d'au moins une caméra, par exemple pour réaliser des sauvegardes.

On peut prévoir qu'une caméra soit disposée sur un casque destiné à être porté par le skipper sur le bateau, ladite caméra communiquant par liaison radio, par exemple wifi, avec les moyens 5 d'émission et de réception de données embarqués sur le bateau.

On peut prévoir qu'au moins une partie des caméras réseau soient motorisées de manière à pivoter pour modifier l'angle de vision de la caméra. L'unité de traitement 92 peut alors être configurée de manière à permettre une commande à distance de la mobilité des caméras pour visionner la scène souhaitée correspondant à une caméra donnée suivant l'angle souhaité.

L'installation décrite ci-dessus permet de mettre en oeuvre un procédé de pilotage des caméras et de transmission de données qui comporte les étapes suivantes. L'exemple décrit ci-dessous est appliqué aux quatre caméras 21, 22, 23, 24, mais peut bien entendu être appliqué à un nombre supérieur de caméras.

On définit pour chaque caméra 21, 22, 23, 24 les paramètres du flux vidéo de qualité et les paramètres d'image fixe souhaités.

Les paramètres du flux vidéo de qualité définis pour chaque caméra comprennent :
- la définition, ou dimension, des images composant le flux vidéo, et/ou
- le nombre d'images par seconde du flux vidéo, encore appelé "fps" pour "frame per second" en anglais, et/ou
- la couleur ou le noir et blanc, et/ou
- le taux de compression du flux vidéo.

Le taux de compression du flux vidéo est au moins fonction d'un paramètre, appelé débit cible, qui correspond au débit de donnée que l'on souhaite allouer audit flux vidéo, encore appelé "bit rate" en anglais. Ce débit cible correspond sensiblement au débit consommé par l'émission du flux vidéo de la caméra sélectionnée. Préférentiellement, la définition, ou dimensions, de l'image du flux vidéo est figée pour le calcul du taux de compression. De même, avantageusement, le nombre d'images par seconde du flux vidéo est également figé. Ainsi, l'unité de traitement intégrée à la caméra comprime le flux vidéo en jouant principalement sur la qualité d'image de manière à atteindre un débit de donnée correspondant au débit cible défini.

Les paramètres d'image fixe définis pour chaque caméra comprennent :
- la définition, ou dimension, de l'image fixe, et/ou
- la couleur ou le noir et blanc, et/ou
- le taux de compression du flux vidéo.

En variante, on peut prévoir que le choix de couleur ou noir et blanc, ne fasse pas partie desdits paramètres, lesdites images fixes étant alors transmises en couleur par les caméras et converties en noir et blanc au niveau de la régie.

Une fois lesdites caméras paramétrées, on met en pause pour chaque caméra l'émission du flux vidéo de qualité jusqu'à réception par cette caméra de la requête principale R1 qui autorise l'émission par ladite caméra ainsi sélectionnée du flux vidéo de qualité suivant les paramètres définis initialement. La requête principale R1 correspond ainsi à une consigne de "lecture" du flux vidéo de la caméra autorisant sa transmission à la régie.

La suspension d'émission de flux vidéo n'empêche pas l'émission d'images fixe suite à la réception d'une requête auxiliaire. Ainsi, comme illustré à la figure 4, entre les instants t0 et t1, tant qu'aucune caméra n'a été sélectionnée, le module 921 de la régie 3 envoie, de manière automatique et à intervalle de temps donné, à chaque caméra une requête auxiliaire R2 pour obtenir de chaque caméra une image fixe rafraichie régulièrement.

Comme illustré par le graphique de la figure 4 pris entre les temps t1 et t2, pour sélectionner une caméra, on envoie depuis la régie 3, à l'aide du module 921, une requête principale R1 à l'une des caméras, ici la caméra 21, appelée caméra sélectionnée, pour demander un flux vidéo dit de qualité correspondant sur ledit graphique de la figure 4 au débit D1. Le module 922 envoie alors aux autres caméras 22, 23, 24, des requêtes auxiliaires, pour demander des images fixes correspondant respectivement sur ledit graphique de la figure 4 aux débits D2, D3, D4.

Lesdites caméras 21, 22, 23, 24 transmettent à la régie 3 les données d'image en fonction des requêtes reçues et on visualise simultanément, dans des fenêtres de visualisation 41, 42, 43, 44 distinctes desdits moyens de visualisation 4, les données d'image envoyées par chaque caméra 21, 22, 23, 24.

L'unité de traitement électronique et informatique est configurée de telle sorte que l'envoie, via le module 921, d'une requête principale à la caméra sélectionnée empêche l'envoie, via le module 922, d'une requête auxiliaire à ladite caméra sélectionnée tant que celle-ci n'a pas reçu de requête de suspension d'émission du flux vidéo. Autrement dit, l'envoi de requête auxiliaire à la caméra sélectionnée est interrompu tant que ladite caméra est sélectionnée, c'est-à-dire tant que l'émission de son flux vidéo n'est pas suspendue.

Comme rappelé ci-dessus et comme visible à la figure 2, la régie comprend des moyens d'affichage 4, formés par un écran d'ordinateur relié à l'unité de traitement 92, qui offrent une vue multi-caméras permettant de visualiser simultanément les données d'image des différentes caméras dans des fenêtres d'affichage distinctes.

Comme illustré par le graphique de la figure 4 pris au niveau du temps t2, pour changer de caméra sélectionnée, l'opérateur clique sur la fenêtre de visualisation de la nouvelle caméra, par exemple la caméra 22, que l'on souhaite sélectionner, ce qui génère l'envoi d'une requête de mise en pause de la transmission du flux vidéo de la caméra 21 sélectionnée jusqu'alors. La suspension dudit flux vidéo permet de ne plus transmettre le flux vidéo de ladite caméra 21 tout en conservant en mémoire pour ladite caméra 21 les paramètres d'émission du flux vidéo de qualité souhaité pour pouvoir demander à nouveau le flux vidéo de cette caméra plus tard avec un risque de latence minimal. Le module 922 émet alors une requête principale R1 à la caméra nouvellement sectionnée 22 pour recevoir un flux vidéo de qualité correspondant au débit D2 et le module 921 émet une requête auxiliaire R2 aux autres caméras 21, 23, 24 dite alors auxiliaire pour recevoir des images fixes correspondant respectivement aux débits D1, D3 et D4, en particulier à la caméra 21 précédemment sélectionnée dont l'émission de flux vidéo vient d'être suspendue.

Le flux vidéo de la caméra sélectionnée récupéré par la régie 3, est de préférence transmis à un diffuseur de contenu, tel qu'un opérateur de télévision, un opérateur Internet ou encore un opérateur de téléphonie mobile. Le flux vidéo peut être retraité au niveau de ladite régie pour être adapté au format de diffusion souhaité. Les termes "caméra sélectionnée" peuvent désigner différentes caméras dans le temps si la sélection change au cours du temps. Le flux vidéo récupéré peut ainsi être diffusé en temps réel ou en différé vers différents portails, tels que sites internet, mobiles 3G, télévision etc...

Les flux vidéo traités par la régie 3 peuvent être mis à disposition de différents terminaux 202 tels que Smartphone, Pocket PC, ordinateur portable, ordinateur. Préférentiellement la régie propose différents formats de flux vidéo adaptés aux différents terminaux. Les formats proposés permettent d'offrir différentes dimensions et qualités du flux vidéo retransmis en fonction du débit de téléchargement du terminal et/ou des caractéristiques techniques dudit terminal. On peut prévoir également que le flux vidéo soit mis à disposition par un serveur RTSP (Real Time Streaming Protocol).

Les enregistrements de flux vidéo réalisés par la régie 3 à l'aide de l'unité informatique 92 suite à la réception des flux vidéo des caméras, avec montage ou non, peuvent être copiés sur un serveur 203 relié au réseau internet 101 pour une diffusion par exemple en streaming du contenu desdits flux vidéo. Les enregistrements réalisés à l'aide de l'unité informatique 9 peuvent également être sauvegardés sur un serveur 204.

On peut prévoir que l'unité de traitement 92 de la régie 3 soit équipée ou reliée à des moyens de communication 205 avec des personnes extérieures telles que des journalistes, lesdits moyens de communication comprenant au moins un micro pour transmettre via la connexion satellitaire des flux audio (par exemple les questions des journalistes). Dans ce cas un micro est également relié de manière directe ou indirecte aux moyens 5 d'émission et de réception pour transmettre le flux audio du bateau à destination de la régie. La régie permet ainsi d'animer des conférences avec le skippeur.

De manière plus générale, on peut prévoir que des moyens de transmission, tels que micro, et de restitution, tels que casque ou haut-parleur, de flux audio soient reliés aux moyens d'émission et de réception 5 pour permettre la transmission de flux audio entre le bateau à la régie. La transmission de flux audio consomme une faible quantité de bande passante comparée à l'envoi de données d'image.

La présente invention n'est nullement limitée aux modes de réalisation décrits et représentés, mais l'homme du métier saura y apporter toute variante conforme à son esprit.

## Revendications

1. Procédé de pilotage d'au moins deux caméras (21, 22, 23, 24), dites caméras réseau, aptes à communiquer par un réseau de communication (100, 101) avec des moyens (9) d'émission et de réception de données d'une unité de pilotage desdites caméras, appelée régie (3), de préférence située à terre, chacune desdites caméras étant apte à recevoir des requêtes et à émettre des données d'image, telles que des flux vidéo et des images fixes, en fonction des requêtes reçues, **caractérisé en ce que** ledit procédé comprend au moins les étapes suivantes:
- on envoie depuis la régie (3) une requête dite principale (R1) à l'une des caméras (21), appelée caméra sélectionnée, pour demander un flux vidéo dit de qualité, et
- on envoie depuis la régie (3) une ou plusieurs requêtes dites auxiliaires (R2) à l'autre ou au moins une partie des autres caméras (22, 23, 24), appelées caméras auxiliaires, pour demander des images fixes,
- on visualise simultanément, dans des fenêtres de visualisation (41, 42, 43, 44) distinctes, les données d'image envoyées par chaque caméra (21, 22, 23, 24) en fonction des requêtes reçues par lesdites caméras,
ledit procédé étant également **caractérisé en ce que** lesdites requêtes auxiliaires (R2) sont émises avec un intervalle de temps, par exemple une seconde, supérieur à l'intervalle de temps séparant deux images successives composant le flux vidéo de qualité.

2. Procédé selon la revendication 1, **caractérisé en ce que**
- on définit pour chaque caméra (21, 22, 23, 24) les paramètres du flux vidéo de qualité et les paramètres d'image fixe souhaités,
- on suspend pour chaque caméra (21, 22, 23, 24) l'émission du flux vidéo de qualité jusqu'à réception par ladite caméra (21) ainsi sélectionnée de la requête principale (R1) qui autorise l'émission par ladite caméra (21) du flux vidéo de qualité.

3. Procédé selon l'une des revendications précédentes, **caractérisé en ce que**, pour changer de caméra sélectionnée :
- on émet depuis la régie (3) une requête de mise en pause de l'émission du flux vidéo de la caméra (21) précédemment sélectionnée,
- on émet une requête principale (R1) à la caméra (22) que l'on souhaite sélectionner et une requête auxiliaire (R2) à l'autre ou au moins l'une des autres caméras (21, 23, 24) dite alors auxiliaire.

4. Procédé selon l'une des revendications précédentes, **caractérisé en ce que** les débits de données consommés par l'émission du flux vidéo de qualité de la caméra sélectionnée (21) et par l'émission des images fixes de la ou des caméras auxiliaires (22, 23, 24) sont choisis de telle sorte que la somme desdits débits est inférieure au débit d'émission maximal autorisé pour la partie du réseau de communication de plus faible bande passante, par exemple une partie du réseau de communication formée par un réseau satellite.

5. Procédé selon l'une des revendications précédentes, **caractérisé en ce que** les paramètres du flux vidéo de qualité définis pour chaque caméra comprennent :
- la définition, ou dimension, des images composant le flux vidéo, et/ou
- le nombre d'images par seconde du flux vidéo, et/ou
- la couleur ou le noir et blanc, et/ou
- le taux de compression du flux vidéo.

6. Procédé selon la revendication 5, **caractérisé en ce que** le taux de compression du flux vidéo est au moins fonction d'un paramètre, appelé débit cible, qui correspond au débit de données que l'on souhaite allouer audit flux vidéo.

7. Procédé selon l'une des revendications précédentes, **caractérisé en ce que** les paramètres d'image fixe définis pour chaque caméra comprennent :
- la définition, ou dimension, de l'image fixe, et/ou
- la couleur ou le noir et blanc, et/ou
- le taux de compression du flux vidéo.

8. Procédé selon l'une des revendications précédentes, **caractérisé en ce que** le flux vidéo de la caméra sélectionnée récupéré par la régie (3) est transmis à un diffuseur de contenu, tel qu'un opérateur de télévision, un opérateur Internet ou encore un opérateur de téléphonie mobile.

9. Installation de pilotage d'au moins deux caméras (21, 22, 23, 24), dites caméras réseau, aptes à recevoir des requêtes et à émettre des données d'image, telles que des flux vidéo et des images fixes, en fonction des requêtes reçues,
ladite installation comprenant au moins une unité de pilotage (3), appelée régie, équipée de moyens (9) d'émission et de réception de données aptes à communiquer par un réseau de communication (100, 101) avec lesdites caméras (21, 22, 23, 24), lesdits moyens (9) d'émission et de réception de données comprenant une unité de traitement électronique et informatique, telle qu'un ordinateur, **caractérisée en ce que** ladite unité comprend au moins :
- un module d'émission de requête dite principale (R1) pour demander à l'une des caméras (21), appelée caméra sélectionnée, un flux vidéo dit de qualité, et
- un module d'émission d'une ou plusieurs requêtes dites auxiliaires (R2) pour demander à l'autre ou au moins une partie des autres caméras (22, 23, 24), appelées caméras auxiliaires, des images fixes,
- des moyens de visualisation (4) simultanée, dans des fenêtres de visualisation (41, 42, 43, 44) distinctes, des données d'image envoyées par chaque caméra (21, 22) en fonction des requêtes reçues par lesdites caméras, et **en ce que** ledit module d'émission de requêtes auxiliaires (R2) est configuré pour émettre lesdites requêtes auxiliaires (R2) avec un intervalle de temps, par exemple une seconde, supérieure à l'intervalle de temps séparant deux images successives composant le flux vidéo de qualité,

10. Installation selon la revendication 9, **caractérisée en ce que** ladite installation comprend des moyens de définition permettant de définir pour chaque caméra (21, 22, 23, 24) les paramètres du flux vidéo de qualité et les paramètres d'image fixe souhaités,
et des moyens de mise en pause permettant de suspendre, pour chaque caméra (21, 22, 23, 24), l'émission du flux vidéo de qualité correspondant, jusqu'à réception par ladite caméra (21) d'une requête principale (R1) qui autorise l'émission par ladite caméra (21) du flux vidéo de qualité.

11. Installation selon l'une des revendications 9 ou 10, **caractérisée en ce que** ladite installation comprend des moyens d'indication permettant d'indiquer la caméra que l'on souhaite sélectionner et des moyens de changement de sélection de caméra permettant de changer de caméra sélectionnée,
lesdits moyens de changement de sélection de caméra étant configurés pour, lorsque la caméra indiquée par lesdits moyens d'indication est différente de celle précédemment sélectionnée, commander l'émission par les moyens de mise en pause d'une requête de mise en pause de l'émission du flux vidéo de la caméra (21) précédemment sélectionnée, et commander l'émission par le module d'émission de requête principale (921) d'une requête principale (R1) à la caméra (22) indiquée par lesdits moyens d'indication et l'émission par le module d'émission de requête auxiliaire (922) d'une requête auxiliaire (R2) à l'autre ou au moins l'une des autres caméras (21, 23, 24) dite alors auxiliaire.

12. Ensemble de transmission de données d'image, telles que flux vidéo et images fixes, issues de caméras (21, 22, 23, 24, 25), dites caméras réseau, embarquées sur un véhicule (1), de préférence un bateau, ledit ensemble comprenant :
- au moins deux caméras (21, 22, 23, 24, 25) réseau disposées sur ledit véhicule (1), aptes chacune à recevoir des requêtes et à émettre des données d'image en fonction desdites requêtes reçues,
- des moyens (5) d'émission et de réception de données auxquels sont reliées lesdites caméras, lesdits moyens (5) d'émission et de réception de données des caméras étant configurés pour communiquer avec un réseau de communication (100, 101),
- une installation de pilotage des caméras,
**caractérisé en ce que** ladite installation de pilotage est conforme à l'une des revendications 9 à 11.

13. Ensemble selon la revendication 12, **caractérisée en ce qu'**au moins une partie dudit réseau de communication (100, 101) étant formée par un réseau satellite (100), lesdits moyens (5) d'émission et de réception de données, auxquels sont reliées les caméras (21, 22, 23, 24, 25) embarquées sur le véhicule, sont équipés d'une antenne satellite (8) pour l'émission et la réception des données par ledit réseau satellite.

14. Ensemble selon l'une des revendications 12 ou 13, **caractérisé en ce que** le véhicule (1) étant un bateau habitable, de préférence un multicoque tel qu'un trimaran, au moins une caméra (23) est disposée à l'intérieur de l'habitacle du bateau et une autre (22) à l'extérieur de l'habitacle.

15. Ensemble selon l'une des revendications 12 à 14, **caractérisé en ce que**, le véhicule (1) étant un bateau, de préférence un multicoque tel qu'un trimaran, au moins une caméra (21) est disposée sur le bateau de telle sorte que son champ couvre l'arrière (14) du bateau et au moins une autre caméra (22) de telle sorte que son champ couvre l'avant (13) du bateau, et, de préférence, au moins une caméra (24) est disposée de telle sorte que son champ couvre la zone de tribord du bateau et au moins une autre caméra (25) est disposée de telle sorte que son champ couvre la zone de bâbord du bateau.
